Europäisches Patentamt

European Patent Office

Office européen des brevets

(19)

(11) Veröffentlichungsnummer : **0 015 416**
**B1**

(12) EUROPÄISCHE PATENTSCHRIFT

(45) Veröffentlichungstag der Patentschrift :
09.09.81

(51) Int. Cl.³ : **B 01 D 13/00**

(21) Anmeldenummer : **80100748.5**

(22) Anmeldetag : **14.02.80**

(54) **Modulblock für osmotische Trennverfahren.**

(30) Priorität : 24.02.79 DE 2907319

(43) Veröffentlichungstag der Anmeldung :
**17.09.80 (Patentblatt 80/19)**

(45) Bekanntmachung des Hinweises auf die Patenterteilung : 09.09.81 Patentblatt 81/36

(84) Benannte Vertragsstaaten :
**AT BE CH DE FR GB IT NL**

(56) Entgegenhaltungen :
**AU - B - 412 451**
**DE - A1 - 2 632 044**
**DE - A1 - 2 650 341**
**DE - A1 - 2 717 048**

(73) Patentinhaber : **BAYER AG**
**Zentralbereich Patente, Marken und Lizenzen**
**D-5090 Leverkusen 1, Bayerwerk (DE)**

(72) Erfinder : **von Bonin, Wulf, Dr.**
**Mendelssohnstrasse 30**
**D-5090 Leverkusen (DE)**
Erfinder : **Lahrs, Jürgen, Dr.**
**Volberger Weg 11**
**D-5000 Köln 91 (DE)**
Erfinder : **Born, Eberhard**
**Im Oberiddelsfeld 7**
**D-5000 Köln 80 (DE)**

# 0 015 416

## Modulblock für osmotische Trennverfahren

Die Erfindung betrifft einen Modulblock für osmotische Trennverfahren, wobei eine Druckpermeationseinheit aus einem stirnseitig verschlossenen Druckrohr mit einer Filtrationseinheit besteht und die Lösungszufuhr bzw. -abfuhr und die Permeatabfuhr über an den Deckeln des Druckrohrs vorhandene Flansche erfolgt. Es ist mit dieser Vorrichtung möglich, mit wenigen Handgriffen die Filtrationseinheit auszuwechseln und gegebenenfalls zu recyclieren.

Mit wachsender Bedeutung der Druckpermeation, also Ultrafiltration und Reversosmose, sind auch Wirtschaftlichkeitsprobleme stark in den Vordergrund gerückt. Neben den Energie- und Personalkosten sind für ein wirtschaftliches Betreiben der Druckpermeation die Anlagekosten von entscheidender Bedeutung. Die meisten Flachmembranmodule sind so aufwendig konstruiert, daß sie keine « Wegwerfmodule » sein können, sondern immer für einen Membranwechsel ausgelegt sind. Ein solcher Membranwechsel ist jedoch sehr arbeitsintensiv und von daher mit hohen Kosten verbunden. Darüber hinaus muß auch der während der Membranwechselzeit entstehende Produktionsausfall zu den Membranwechselkosten hinzugezählt werden.

Es ist für den Betreiber einer Druckpermeationsanlage im allgemeinen wesentlich einfacher, wenn er die verbrauchten Module ohne großen Arbeitsaufwand durch neue Module ersetzen kann. Eine solche Arbeitsweise setzt jedoch voraus, daß die Herstellung des Moduls so kostengünstig ist, daß bei einem notwendig werdenden Membranwechsel auf diesen verzichtet, und der gesamte Modul, bzw. die Filtrationseinheit, gegen einen neuen ausgetauscht werden kann.

Ein solcher Modultausch wird beispielsweise bei Wickel-, Hohlfein- und Hohlfasermodulen praktiziert, wobei jedoch der gesamte Modul, d.h. Filtrationseinheit nebst Druckbehälter ausgetauscht werden muß.

Mit diesen Modultypen können nicht alle Trennprobleme bearbeitet werden. So ist man bei den drei genannten Typen nur sehr begrenzt in der Lage, feststoffhaltige flüssige Systeme zu bearbeiten. Darüber hinaus bleibt der Arbeitsdruck bei Hohlfaserkapillaren auf so kleine Drücke beschränkt, daß keine Reversosmose durchführbar ist.

Es ist vorteilhaft, gewisse Stofftrennprobleme auf robusten Flachmembranmodulen, wie sie z.B. als Platten-Rahmen-Modulen verschiedenster Konstruktion bekannt sind, durchzuführen.

Bekannte Flachmembranmodule sind jedoch in der Konstruktion oder Herstellung aufwendig ; bekannt sind Kapselungen (DE-A-25 42 957, DE-B-16 42 808) oder fünfschichtige Modulelemente mit Permeatauffangschale (DE-A-24 33 456) oder spröde poröse Trägerplatten komplizierter Geometrie (DE-A-26 03 505), nur schwer gleichmäßig zu beschichtende durchbrochene Trägerkörper (DE-A-25 25 972) oder Elemente, die nur in Reihe geschaltet werden können und bei denen Dichtungsprobleme auftreten (DE-A-25 56 210).

Derartige Typen sind in den meisten Fällen nicht als Einwegmodulen, sondern für einen Membran- oder Elementwechsel konzipiert. Oftmals ist zur Veränderung des Strömungsverlaufs, z.B. beim Übergang von Parallel- zu Serienschaltung die zusätzliche Mitverwendung von gesonderten Verschlußelementen (DE-A-25 42 957, CH-A-542 639) und der Einbau von Dichtungselementen oder Trennwänden erforderlich.

Aufgabe der Erfindung ist es, einen Modulblock für osmotische Trennverfahren mit einer Druckpermeationseinheit zu entwickeln, bei dem es möglich ist, mit wenigen Handgriffen den Verschleißteil, nämlich die Filtrationseinheit, auszuwechseln und gegebenenfalls zu recyclieren. Die Aufgabe wird dadurch gelöst, daß das Druckrohr so im Modulblock gelagert ist, daß es herausklappbar ist, und dann eine Stirnseite so freiliegt, daß die erneuerbare, die Permeatabfuhr integriert enthaltende Filtrationseinheit in das Rohr einlegbar bzw. herausnehmbar ist, und die Filtrationseinheit aus einer Basisplatte und Stapeln von distanzierten Membranfilterplatten besteht, wobei Kanäle in den Platten zur Permeatabfuhr vorhanden sind, die zusammen mit den gebohrten Abstandhaltern in Verbindung zu den Anschlüssen an der Basisplatte stehen.

Gegenstand der Erfindung ist speziell ein Modulblock für osmotische Trennverfahren im Druckbereich bis zu 180 bar, gekennzeichnet durch das Zusammenwirken verschiedener konstruktiver Einzelmaßnahmen, bestehend aus einem Gestell, in dem mindestens ein Modul enthalten ist, und der Modul aus einem Druckrohr mit an den Stirnseiten angebrachten Endplatten besteht, die es flüssigkeits- und druckdicht abschließen, und die Zu- und Abflußflansche für die zu behandelnde Lösung enthalten, wobei das Druckrohr des Moduls auf einer Achse drehbar gelagert und aus dem Gestell herausgeklappt werden kann, so daß mindestens eine Stirnseite vollständig freiliegt, an der eine Membranfilterkerze eingeführt bzw. herausgenommen werden kann, bestehend aus einer Basisplatte, die zwischen Endplatte und Druckrohr einen dichtenden Abschluß darstellt und die Permeatabfuhrkanäle enthält, wobei auf der Basisplatte in Peripherienähe zwei gegenüberliegende Reihen von den Schrauben angebracht sind auf die Menbranfilterplatten, durch Abstandshalter voneinander distanziert, aufgezogen sind, und so einen durchströmbaren Stapel bilden, und bis zu 10 Membranplatten eine Durchströmeinheit darstellen, dann eine gegebenenfalls auch als Membranplatte fungierende Umlenkplatte vor der nächsten Durchströmeinheit folgt, so daß sich beim Durchströmen der Membranfilterkerze eine Zickzackströmung ergibt, und die Membranplatte die Gestalt eines das Druckrohr ausfüllenden Kreises haben, von dem zwei gegenüberlie-

**0 015 416**

gende Segmente abgeschnitten sind und die Umlenkplatten die Gestalt eines gleichartigen Kreises haben, bei den nur ein Segment abgeschnitten ist, und die beiden Plattentypen zwei gegenüberliegende Reihen von Bohrungen haben, die mit den Schrauben der Basisplatte korrespondieren, jedoch im Durchmesser etwas größer sind als die Dehnschrauben, mit denen der ganze Plattenstapel nebst Abstandshaltern dichtend zusammengepreßt wird und die Permeatabfuhr in Richtung Basisplatte aus dem Inneren der Membranfilterplatten längs den Ringkanälen um die Dehnschrauben erfolgt, und die Membranfilterplatte aus einer porösen, druckfesten, Stützschicht mit beidseitig aufgelegten, gegebenenfalls trägergeschützten Membranen besteht und die Abstandhalter in die Bohrungen der Stützplatte eingelegt und von der Membran überdeckt werden, wobei der Ringkanal frei bleibt, in den durch im Abstandshalter angebrachten Kanäle in der mittigen Plattenebene das Permeat aus dem Platteninneren in die Ringkanäle zu einem Abflußkanal in der Basisplatte laufen kann.

Die erfindungsgemäße Vorrichtung ist in der Zeichnung dargestellt und im folgenden weiter beispielhaft beschrieben.

Es zeigen :

Fig. 1 Draufsicht auf einen Modulblock mit einer Druckpermeationseinheit ;
Fig. 2 Modulblock mit 2 Druckpermeationseinheiten von vorne ;
Fig. 3 Modulblock mit Tandemmodul ;
Fig. 4 Schnitt durch eine Filtrationseinheit ;
Fig. 5 Schnitt durch die Basisplatte ;
Fig. 6 Membranplatte ;
Fig. 7 Umlenkplatte ;
Fig. 8 Draufsicht auf einen Abstandshalter ;
Fig. 9 Membranplatte und Abstandshalter, Ausschnitt in Seitenansicht.

Ein Modulblock besteht aus drei Baugruppen : dem Gestell, einem oder mehreren Druckpermeationseinheiten, das sind Druckrohre mit Endplatten, und einer Filtrationseinheit für jede Druckpermeationseinheit, die aus einer Basisplatte mit Membranfilterkerze besteht.

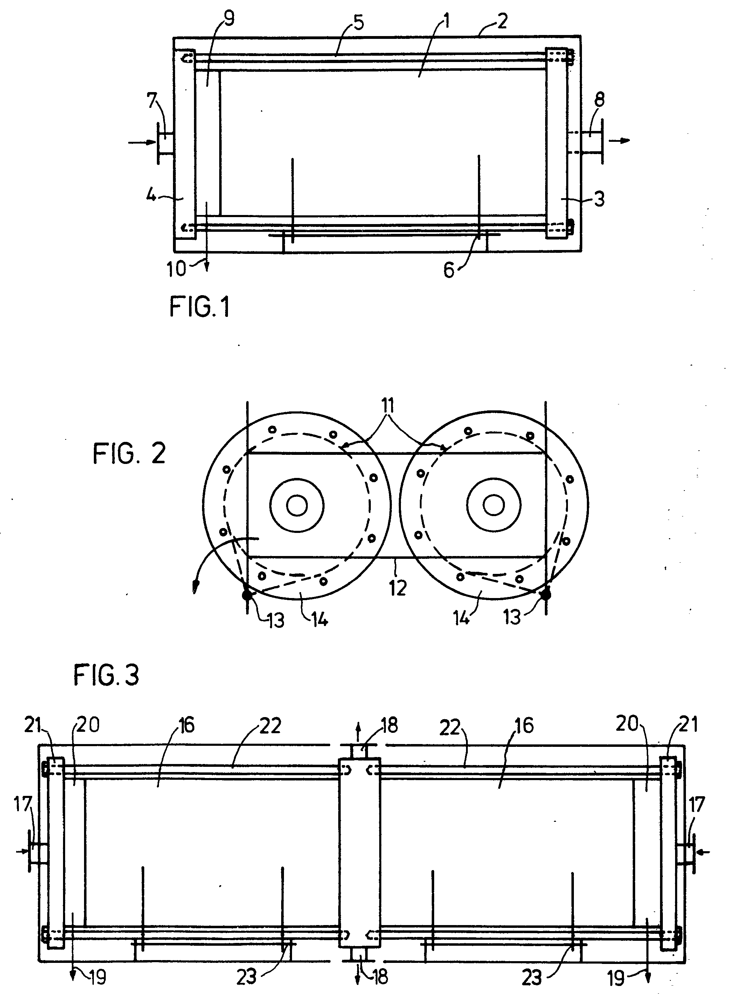

In Figur 1 besteht der Modulblock, aus einem Druckrohr 1, das auf einem Gestell 2 gelagert ist. An den Stirnseiten des Druckrohres 1 sind Endplatten 3, 4, die über Zuganker 5 das Druckrohr 1 flüssigkeitsdicht abschließen. Werden die Zuganker 5 gelöst, so kann das Druckrohr 1 hoch und nach außen geklappt werden ; das Druckrohr ist seitlich an dem Gestell gelagert 6. Die Lösung läuft über Flansche an den Endplatten bei 7 zu und bei 8 ab. Das Permeat wird in der Filtrationseinheit zur Basisplatte 9 geführt und fließt dort seitlich 10 ab. Eine Druckpermeationseinheit hat etwa 10 m² wirksame Membranfläche.

In Figur 2 besteht ein Modulblock aus 2 Druckpermeationseinheiten 11. Sie sind in dem Gestell 12 nebeneinanderliegend angeordnet und sie können um die Lager 13 nach außen geklappt werden. Die Endplatten 14 bleiben in ihrer Lage ; der in Figur 2 dargestellte 20 m²-Block hat die Abmessungen 80 × 75 × 50 cm und wiegt ca. 250 kg. Der zulässige Betriebsdruck geht bis 180 bar, vorzugsweise liegt er bei 3-80 bar.

Ein Modulblock mit 20 m² Membranfläche ist als Tandemmodul in Figur 3 dargestellt. Zwei aneinanderstoßende Druckrohre 16 werden von der Stirnseite her beschickt 17. Die Lösungsabfuhr erfolgt in der Mitte 18. Die Permeatabfuhr erfolgt wie bei dem Modulblock in Figur 1 seitlich 19 aus der Basisplatte 20. Die Endplatten 21 werden wieder durch Zuganker 22 zusammengepreßt. Die Druckrohre 16 können jede für sich mit der Schwenkvorrichtung 23 nach oben und außen geklappt werden. In dieser Stellung ist das Auswechseln der Filtrationseinheit, die an der Basisplatte 20 hängt, kein Problem.

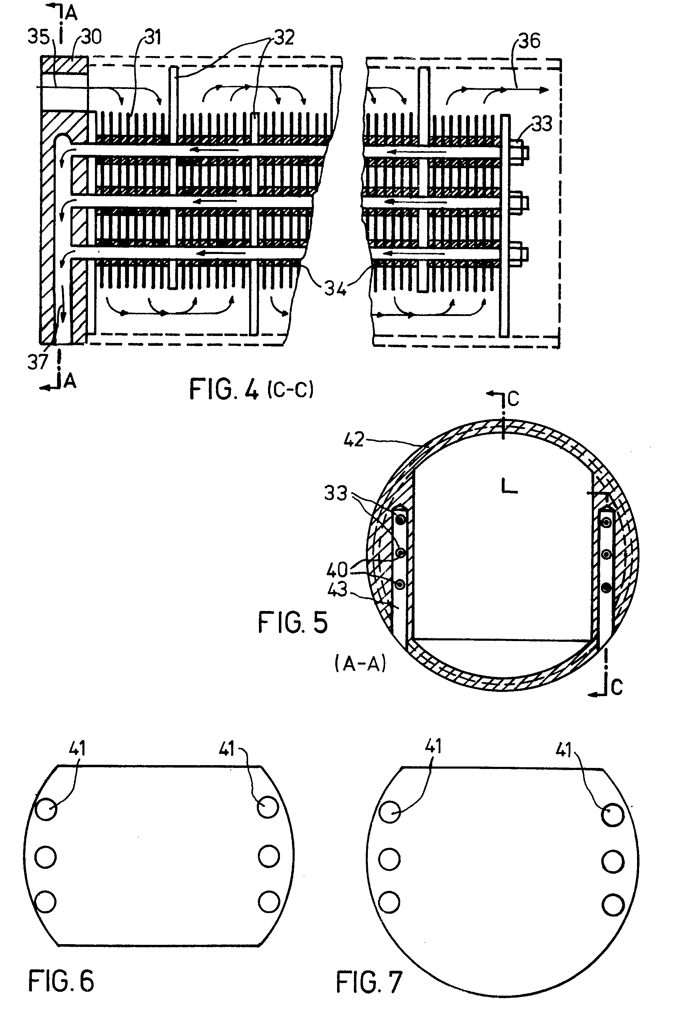

Einen Längsschnitt durch eine Filtrationseinheit (Membranfilterkerze) zeigt Figur 4. Sie besteht aus einer Basisplatte 30 auf der sich die Filterkerze mit Membranplatten 31 und Umlenkplatten 32 aufbaut, die über Dehnschrauben 33 zusammengepreßt werden. Zwischen jeder Membranplatte bzw. zwischen Membranplatte und Umlenkplatte befinden sich Abstandshalter 34, damit die Lösung, die bei 35 durch die Basisplatte zugeführt wird, zu den Membranen auf den Membranplatten 31 gelangen kann. Die Lösungsabfuhr 36 über die obere Endplatte der Druckpermeationseinheit ist angedeutet. Durch die als Schikanen eingebauten Umlenkplatten 32 wird ein zickzackförmiges Durchströmen der Filtrationseinheit gewährleistet. Die Bohrungen in den Membranplatten 31 und Umlenkplatten 32, durch die die Dehnschrauben 33 geführt werden können, sind im Durchmesser größer, als es zur Führung der Dehnschrauben 33 erforderlich wäre. Dadurch ist ein Raum geschaffen, durch den das Permeat bis in die Basisplatte 30 fließen kann. Dort tritt es seitlich aus 37.

Figur 5 zeigt einen Schnitt durch die Basisplatte. Die genaue Lage des Schnittes A-A ist in Figur 4 eingezeichnet, ebenso wie der Verlauf des Schnittes C-C in Figur 5 eingetragen ist. Man erkennt insbesondere, daß um die Dehnschrauben 40 ein freier Raum 41 vorhanden ist, daß also das Permeat entlang den Dehnschrauben in die Basisplatte 42 fließen kann, wo es dann durch die Kanäle 43 gesammelt und nach außen geführt wird. Eine Membranfilterkerze wiegt etwa 20 kg. Es ist eine relativ robuste Einheit, die leicht zu reinigen ist. Unbrauchbar gewordene Membranfilterkerzen können leicht gegen neue ausgewechselt und recycliert werden. Zum Transport wird die Kerze in ein dem Druckrohr ähnliches Kunststoffschutzrohr eingelegt. Eine Membranplatte ist in Figur 6, eine Umlenkplatte in Figur 7 dargestellt. Die Menbranfläche einer Platte beträgt ca. 450 cm².

Der Durchmesser einer Membranfilterkerze ist üblicherweise mit dem Innendurchmesser des Druckrohrs identisch. In diesem Beispiel bilden 8 Membranplatten 31 eine Durchströmeinheit. Dann wird

3

eine Umlenkplatte 32 eingezogen. Die Umlenkplatten sind so angeordnet, daß sie beim Durchströmen der vorgesehen Membranplattenpakete eine Zickzackströmung ergeben. In diesem Beispiel besteht eine Moduleinheit aus 160 Membranplatten. Der Rohrinnendurchmesser beträgt 25 cm. Die Membranplatten sind kreisförmig. Wie in Figur 6 zu erkennen ist, sind 2 gegenüberliegende Segmente abgeschnitten ; bei Umlenkplatten, die sonst wie Membranplatten ausgebildet sind, ist nur ein Segment abgeschnitten. Die Platten haben in Peripherienähe 2 gegenüberliegende Reihen von 3 Bohrungen, die mit den Dehnschrauben der Basisplatte korrespondieren, mit denen der gesamte Membranplattenstapel dichtend zusammengepreßt wird.

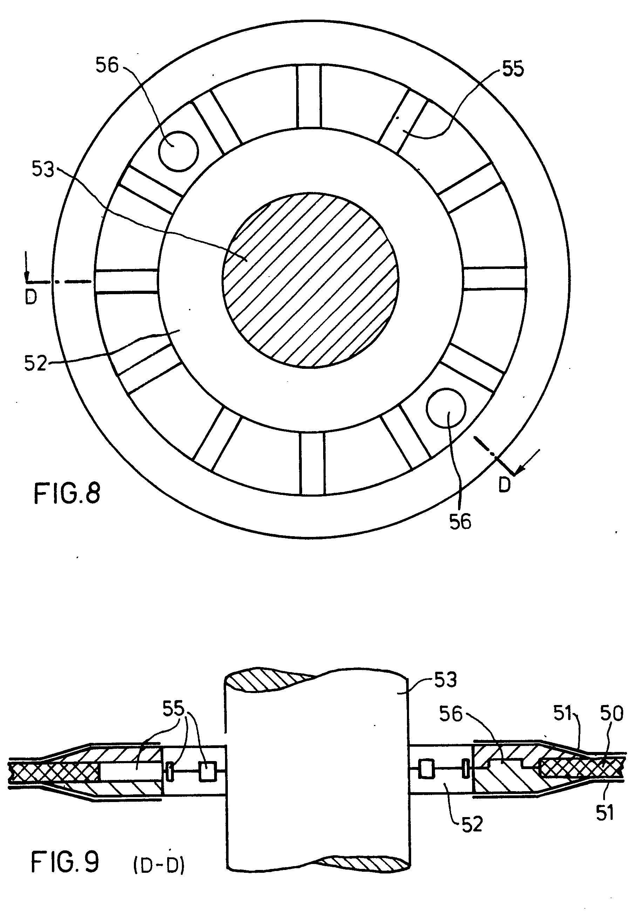

Die Membranplatten bestehen aus einer porösen durckfesten Stützplatte und den beidseitig aufgelegten Membranen. Die Abstandshalter in Figur 8 sind hälftig nach einem Druckkopfprinzip in die poröse Stützplatte eingelegt Fig. 9. Sie werden von der Membran 51 überdeckt, so daß im Falle der Stapelung an den Ringkanälen die Abdichtung durch je 2 aufeinandergepreßte Membranen erfolgt.

In Figur 9 ist der Schnitt D-D nach Figur 8 dargestellt. Die Stützplatte 50, auf der beidseitig eine Membran 51 aufgelegt ist, läßt einen Raum für den Ringkanal 52 um die Dehnschraube 53 frei. Die poröse Stützplatte wird vorzugsweise aus Kunstharz-gebundenden Glasfaservliesen mit beidseitig auflamiertem Glasseidengewebe hergestellt, sie kann jedoch auch aus poröser Keramik, aus Sintermetall oder Sinterkunststoffen wie z.B. aus Polytetrafluorethylen, bestehen.

Die Membran besteht vorzugsweise aus einem porösen Träger, z.B. HD-PE-Papier mit aufgebrachter trennaktiver Membran. Die Herstellung dieser trägergestützen Membran ist prinzipiell unabhängig vom Membranpolymer und erfolgt nach dem Stand der Technik durch Aufbringen der Polymerlösung auf das Trägermaterial, kurzes Antrocknen und Fällen der Membran in einem Wasserbad. Als Polymer kommen Celluloseester z.B.-Acetate, Acrylnitril-Copolymerisate, Polyamide (insbesondere aromatische Typen), Polybenzoxazindione, Polyimide, Polysulfone, Fluorpolymere und andere in Betracht.

Die poröse Stützplatte dient auch der mechanischen Stabilisierung der Membranplatte ; sie wird von der Membran wie von einem Folienbeutel umschlossen. Die Randabdichtung erfolgt durch Verschweißung und/oder gegebenenfalls abdichtente Beschichtung der Randzone mit Kunstharzen, z.B. auf Polyester-, Polyurethan- oder Polyepoxidbasis. Exponierte Stellen werden gegebenenfalls durch Sonderbeschichtungen modifiziert. Der in den Figuren 8 und 9 dargestellte Abstandshalter nimmt die Dichtungskräfte der Vernietung oder Verschraubung des Plattenstapels auf und dient auch zur Abfuhr des durch die Membran in die poröse Stützplatte eintretenden Permeats in die Ringkanäle. Er besteht vorzugsweise aus zwei Hälften, die von beiden Seiten der Stützplatte in die seitliche Lochung eingedrückt werden, wie ein Druckknopf 56 zusammenrasten und an ihrer Berührungsfläche viele, hier z.B. 12, kleine Kanäle 55 enthalten, die das Permeat auf dem Platteninneren an den Ringkanal 52 zwischen Abstandshalter und Dehnschraube weiterleiten.

Die Abstandshalter sind vorzugsweise Kunststoffspritzgußteile, können aber auch aus Metall gefertigt sein. Zusammen mit den Membranplatten bilden sie die bevorzugtermaßen aus nichtmetallischen Werkstoffen gefertigten Teile.

Ein Modulblock wie in Figur 2 dargestellt mit etwa 20 m² Membranfläche hat etwa folgende Leistungs- und Konstruktionsdaten :

| | |
|---|---|
| Durchsatz | $2 \cdot 10^3$ m³/h |
| Druck | 80 bar |
| Druckverlust | ca. $2 \cdot 5$ bar |
| Permeatanfall (5 % Kongorot, 40 bar) | ca. $2 \cdot 0,4$ m³/h |
| Permeatanfall ($H_2O$, 80 bar) | ca. $2 \cdot 0,9$ m³/h |
| Pumpenleistung | 60 bis 120 kW |
| Abmessungen in mm | 785 × 710 × 450 |
| Gesamtgewicht | 270 kg |
| spezifische Oberfläche Druckrohr | 300 m²/m³ |
| spezifische Oberfläche Modulblock | 70 m²/m³ |

Angaben zu den Baugruppen

| | 1 Gestell | | | | 2 Druckrohr mit Endplatten | | | 3 Basisplatte mit Membran-Filter-Kerze | | | | | |
|---|---|---|---|---|---|---|---|---|---|---|---|---|---|
| | Rahmen | Tragpratzen | Lagerblock | Achse | Druckrohr | Endplatte mit Stutzenrohr | Zuganker | Basisplatte | Dehnschraube | Stützplatte | Membran | Umlenkplatte | Abstandshalter |
| Werkstoff | St37 | St37 | St37 | C110 | St35,8 | C22 | 24CrMo | C22 | 24CrMo | ./. | ./. | Kunst. | Kunst. |
| Abmessungen | | | | | | | | | | | | | |
| Länge mm | 785 | 150 | ./. | 420 | 605 | | 780 | | 635 | | | | |
| Breite mm | 710 | 150 | ./. | Ø 16 | Ø 273 | Ø 350 | M24 | Ø 273 | M12 | Ø 252 | Ø 252 | Ø 252 | Ø 24 |
| Höhe mm | 450 | 10 | ./. | ./. | ./. | 38 | | 50 | | 1 | ./. | 3 | 1,75 |
| Gewicht kg | 24 | 1 | ./. | 0,7 | 39,5 | 28 | 2,3 | 6,5 | 0,3 | 0,06 | ./. | 0,165 | ./. |
| Stückzahl | 1 | 4 | 4 | 2 | 2 | 4 | 16 | 2 | 12 | 320 | 640 | 42 | 1920 |

## Ansprüche

1. Modulblock für osmotische Trennverfahren, wobei eine Druckpermeationseinheit aus einem stirnseitig verschlossenen Druckrohr mit einer Filtrationseinheit besteht und die Lösungszufuhr bzw.-abfuhr und Permeatabfuhr über an den Deckeln des Druckrohrs vorhandene Flansche erfolgt, dadurch gekennzeichnet, daß das Druckrohr so im Modulblock gelagert ist, daß es herausklappbar ist und dann eine Stirnseite so freiliegt, daß die erneuerbare, die Permeatabfuhr integriert enthaltende Filtrationseinheit in das Rohr einlegbar bzw. herausnehmbar ist und die Filtrationseinheit aus einer Basisplatte und Stapeln von distanzierten Membranfilterplatten besteht, wobei Kanäle in den Platten zur Permeatabfuhr vorhanden sind, die zusammen mit den gebohrten Abstandshaltern in Verbindung mit den Anschlüssen an der Basisplatte stehen.

2. Modulblock für osmotische Trennverfahren nach Anspruch 1 im Druckbereich bis 180 bar, bestehend aus einem Gestell in dem mindestens ein Modul enthalten ist und der Modul aus einem Druckrohr mit an den Stirnseiten angebrachten Endplatten besteht, die es flüssigkeits- und druckdicht abschließen und die Zu- und Abflußflansche für die zu behandelnde Lösung enthalten, dadurch gekennzeichnet, daß das Druckrohr (1, 11, 16) drehbar gelagert (6, 13, 23) ist und aus dem Gestell (2, 12) herausgeklappt werden kann, so daß mindestens eine Stirnseite (3, 4, 21) vollständig freiliegt, an der eine Membranfilterkerze eingeführt bzw. herausgenommen werden kann, bestehend aus einer Basisplatte (9, 20, 30, 42), die zwischen Endplatte (3, 4, 21) und Druckrohr (1, 16) einen dichten Abschluß darstellt und die Permeatabflußflansche (10, 19, 37, 43) enthält, wobei auf der Basisplatte (9, 20, 30, 42) in Peripherienähe zwei gegenüberliegende Reihen von den Schrauben (33) angebracht sind, auf die Membranfilterplatten, durch Abstandshalter voneinander distanziert, aufgezogen sind und so einen durchströmbaren Stapel bilden und bis zu 10 Membranplatten (31) eine Durchströmeinheit darstellen, dann eine gegebenenfalls auch als Membranplatte fungierende Umlenkplatte (32) vor der nächsten Durchströmeinheit folgt, so daß sich beim Durchströmen der Membranfilterkerze eine Zickzackströmung ergibt, und die Membranplatten die Gestalt eines das Druckrohr (1, 16) ausfüllenden Kreis haben, von dem zwei gegenüberliegende Segmente abgeschnitten sind und die Umlenkplatten die Gestalt eines gleichartigen Kreises haben, bei dem nur ein Segment abgeschnitten ist, und die beiden Plattentypen (31, 32) zwei gegenüberliegende Reihen von Bohrungen (41) haben, die mit den Dehnschrauben (33, 53), der Basisplatte (9, 20, 30) korrespondieren, jedoch im Durchmesser etwas größer sind als die Dehnschrauben 53, mit denen der ganze Plattenstapel nebst Abstandshalter dichtend zusammengepreßt wird und die Permeatabfuhr in Richtung Basisplatte aus dem Inneren der Membranfilterplatten längs den Ringkanälen um die Dehnschrauben herum erfolgt, und die Membranfilterplatte aus einer porösen druckfesten Stützschicht (50) mit beidseitig aufgelegten, gegebenenfalls trägergestützten Membranen (51) besteht und die Abstandshalter in die Bohrung der Stützplatte eingelegt und von der Membran überdeckt werden, wobei der Ringkanal (52) frei bleibt, in dem durch im Abstandshalter angebrachte Kanäle (55) in der mittigen Plattenebene das Permeat aus dem Platteninneren in die Ringkanäle 52 zu einem Abflußkanal (10, 19, 37) in der Basisplatte laufen kann.

## Claims

1. A modular block for osmotic methods of separation wherein a pressure permeation unit consists of a pressure tube which is sealed at the ends, with a filtration unit, and the solution is supplied or delivered and permeate is delivered via flanges provided on the covers of the pressure tube, characterised in that the pressure tube is mounted in the modular block in such a way that it can be flipped out so as to free an end in such a way that the renewable filtration unit containing integral permeate delivery means can be inserted into or removed from the tube, and the filtration unit consists of a base plate and stacks of spaced membrane filter plates, wherein channels are provided in the plates for the delivery of permeate which together with bored spacers are in communication with connections in the base plate.

2. A modular block for osmotic methods of separation according to Claim 1 in a pressure range up to 180 bar, consisting of a frame in which at least one module is contained and the module consists of a pressure tube with end plates arranged on the ends, which seal it tight to liquid and pressure and contain inlet and outlet flanges for the solution to be treated, characterised in that the pressure tube (1, 11, 16) is rotatably mounted (6, 13, 23) and can be flipped out of the frame (2, 12) so as to completely free at least one end (3, 4, 21) at which a membrane filter candle can be introduced or removed, consisting of a base plate (9, 20, 30, 42) which represents a sealed shut-off between the end plate (3, 4, 21) and pressure tube (1, 16) and contains permeate outlet flanges (10, 19, 37, 43), wherein two opposing rows of screws (33) are arranged in the peripheral region on the base plate (9, 20, 30, 42) membrane filter plates which are spaced from each other by the spacers being mounted on the screws, and thus form a penetrable stack, and up to ten membrane plates (31) represent a penetration unit, a deflecting plate (32) optionally also acting as a membrane plate then follows in front of the next penetration unit so as to produce a zigzag flow during penetration of the membrane filter candle, and the membrane plates have the form of a circle filling out the pressure tube (1, 16), of which two opposing segments are cut away, and the deflecting plates have the form of a similar circle from which only one segment is cut away, and the two types of plate (31, 32) have two opposing rows of bores (41) which correspond to the expansion screws (33, 53) in the base plate (9, 20, 30), but are somewhat larger in diameter than the expansion screws (53) with which the entire stack of plates in addition to the spacers is pressed together to form a seal and the permeate is delivered in the direction of the base plate from the interior of the membrane filter plates along the annular channels around the expansion screws, and the membrane filter plate consists of a porous pressure-resistant supporting layer (50) with optionally supported membranes (51) placed on both sides and the spacers are inserted into the bore of the support plate and covered by the membrane, wherein the annular channel (52) in which the permeate can flow through channels (55) arranged in the spacer in the central plate plane out from the interior of the plate into the annular channels (52), to an outlet channel (10, 19, 37) in the base plate remains free.

### Revendications

1. Bloc modulaire pour un processus de séparation osmotique, où on utilise une unité de perméation sous pression comportant un tube de pression obturé sur le côté frontal et associé à une unité de filtration et où l'introduction ou la décharge de solution et la décharge de perméat s'effectuent par l'intermédiaire de tubulures prévues sur les couvercles du tube de pression, caractérisé en ce que le tube de pression est monté dans le bloc modulaire de façon qu'il puisse être écarté vers l'extérieur pour dégager un côté frontal de manière que l'unité de filtration renouvelable qui contient de façon intégrée la décharge de perméat, puisse être mise en place dans le tube ou sortie de celui-ci, et l'unité de filtration se compose d'une plaque de base et de piles de plaques de filtrage à membranes espacées les unes des autres, des canaux étant ménagés dans les plaques pour la décharge du perméat et étant reliés, aussi que les supports d'espacement perforés, avec les raccords prévus sur la plaque de base.

2. Bloc modulaire pour processus de séparation osmotique selon la revendication 1, pouvant opérer dans une plage de pressions jusqu'à 180 bars, se composant d'un bâti dans lequel il est prévu au moins un module qui se compose d'un tube de pression sur les côtés frontaux duquel sont placées des plaques extrêmes qui l'obturent de façon étanche au liquide et à la pression et qui comportent des tubulures d'entrée et de sortie de la solution à traiter, caractérisé en ce que le tube de pression (1, 11, 16) est monté à rotation (6, 13, 23) et peut être sorti à l'extérieur du bâti (2, 12) de manière à dégager complètement au moins un côté frontal (3, 4, 21), par lequel on peut introduire ou sortir une cartouche de filtrage à membrane, se composant d'une plaque de base (9, 20, 30, 42), qui établit une obturation étanche entre une plaque extrême (3, 4, 21) et le tube de pression (1, 16) et qui contient des conduits (10, 19, 37, 43) d'évacuation du perméat, en ce qu'il est prévu sur la plaque de base (9,20,30,42) au voisinage de sa périphérie, deux rangées opposées de tiges filetées réglables (33) qui assurent la fixation de plaques de filtrage à membranes (31) qui sont maintenues espacées l'une de l'autre par des entretoises et qui forment ainsi une pile pouvant être traversée par l'écoulement, jusqu'à dix plaques à membranes (31) constituant une unité de traversée d'écoulement, en ce qu'une plaque déflectrice (32), jouant le cas échéant également le rôle d'une plaque à membrane, est placée en amont de l'unité de passage suivante, de sorte que, lors de la traversée de la cartouche de filtrage à membranes, il se produit un écoulement en zig-zag, en ce que les plaques à membranes (31) ont la forme d'un cercle inscrit dans le tube de pression (1, 16) et dont deux segments opposés sont enlevés, tandis que les plaques déflectrices ont la forme d'un cercle identique dans lequel un seul segment est enlevé, les deux types de plaques (31, 32) comportant deux rangées opposées de trous (41) qui correspondent aux tiges filetées réglables (33, 53) de la plaque de base (9,20,30), mais qui ont cependant un diamètre un peu supérieur à celui des tiges (53) à l'aide desquelles l'ensemble formé par la pile de plaques et les entretoises d'espacement est maintenu comprimé de façon étanche, en ce que la décharge du perméat est effectuée, en direction de la plaque de base, à partir de l'intérieur des plaques de filtrage à membranes et le long des canaux annulaires autour des tiges filetées réglables, en ce que la plaque de filtrage à membrane se compose d'une couche d'appui (50) poreuse et résistante à la pression de part et d'autre de laquelle sont placées des membranes (51), le cas échéant soutenues par un support, les entretoises d'espacement étant engagées dans les trous de la plaque d'appui et étant recouvertes par la membrane, et en ce que les canaux annulaires (52) restent dégagés de manière que le perméat, provenant de l'intérieur des plaques et s'écoulant par lesdits canaux annulaires (52) vers un canal de décharge (10, 19, 37) ménagé dans la plaque de base, puisse passer, dans le plan médian des plaques, dans des canaux (55) formés dans les entretoises d'espacement.

FIG.1

FIG. 2

FIG.3

FIG. 4 (C-C)

FIG. 5

(A-A)

FIG. 6

FIG. 7

FIG.8

FIG.9   (D-D)